# EUROPEAN PATENT SPECIFICATION

(11) **EP 0 924 899 B1**
(45) Date of publication and mention of the grant of the patent: **06.08.2008**
(21) Application number: 97122204.7
(22) Date of filing: 16.12.1997
(51) Int. Cl.: H04L 12/417, H04L 12/407

(54) **Circuit arrangement for a synchronized interchange of data between different locally dedicated signal sources**
Schaltungsanordnung zum synchronen Austausch von Daten zwischen verschiedenen lokal zugeordneten Signalquellen
Agencement de circuit pour l'échange de données entre différentes sources de signal localement dédiées

(43) Date of publication of application: 23.06.1999
(73) Proprietor: LITEF GmbH, 79115 Freiburg (DE)
(72) Inventor: Spahlinger, Günter, Dr., 70188 Stuttgart (DE); Ribes, Mauricio, 79199 Kirchzarten (DE)
(74) Representative: Müller, Frithjof E.

(56) References cited:
- EP-A- 0 389 683
- US-A- 4 799 052
- PATENT ABSTRACTS OF JAPAN vol. 17, no. 87 (P-1491), 22 February 1993 & JP 04 287150 A (SONY CORP.)
- PATENT ABSTRACTS OF JAPAN vol. 17, no. 634 (P-1649), 24 November 1993 & JP 05 204849 A (SONY CORP.)

## Description

The invention relates to a circuit arrangement for a synchronized interchange of data between different locally dedicated signal sources in distributed configuration, each signal source being provided with an allocated controller.

The presence of a processor as a dedicated controller is nowadays a reality in many distributed configuration measurement systems comprising as an example a plurality of sensors. This allows to look at a modern distributed configuration sensor system as a set of interactive units capable of interchanging data in a distributed processing configuration. In order to take advantage of this, a communication network must be provided to allow a data interchange to take place. However, up to now for example in the arrangement of a plurality of inertial sensors like gyros and accelerometers the synchronized processing of a complex communication protocol causes considerable problems. The available processing power, usually an ASIC, was devoted to solve the main problem only, i.e. to control the instruments (signal sources). Up to now, the delivery of useful data is provided by placing it on a register that can be mapped into an external controlling computer's memory.

This solution, however, requires complex wiring to transfer the data to the main computer and an additional, independent process to synchronize the time at which measurement values are taken.

Documents US 4,799,052, JP 04287150 and JP 05204849 disclose systems for synchronized interchange of data between signal sources of a distributed configuration of signal sources.

It is an object of the present invention to provide a method and an arrangement of circuitry that allows to reduce the complexity of the hardware system, on the one hand, however allowing a interactive communication between the signal sources or a data extracting unit on the basis of a simple protocol, on the other hand.

According to the invention, a circuit arrangement for synchronized interchange of data between different locally dedicated signal sources of a distributed configuration wherein each signal source is provided with an allocated controller, comprising:
- a single synchronous serial bus with timing information implemented in the bus standard protocol comprising a link for bi-directional serial multi-channel data interchange between said signal source controllers and/or a data extracting unit;
- said single synchronously operated serial bus is operated for synchronized data exchange between a plurality of intelligent sensors or servers and one master controller in an operational mode and in a command mode;
- said master controller is controlled in said operational mode so that data ex-change between said master controller and at least one of said sensors is initiated and completed over two time frames; and
- each of said frames is formed of groups of same plurality of bytes so that a specific instrument address placed in a specific byte position by said master controller is followed by a defined number of byte positions reserved for sen-sor response information from an instrument addressed during the previous frame is provided.

The present invention further provides a system comprising: locally dedicated signal sources in a distributed configuration, each provided with an allocated controller, a single synchronous serial bus with timing information implemented in the bus standard protocol comprising a link for bi-directional serial multi-channel data interchange between said signal source controllers and/or a data extracting unit;
- said single synchronously operated serial bus is operated for synchronized data exchange between a plurality of intelligent sensors or servers and one master controller in an operational mode and in a command mode;
- said master controller is controlled in said operational mode so that data exchange between said master controller and at least one of said sensors is initiated and completed over two time frames; and
- each of said frames is formed of groups of same plurality of bytes so that a specific instrument address placed in a specific byte position by said master controller is followed by a defined number of byte positions reserved for sensor response information from an instrument addressed during the previous frame.

According to the invention, a circuit arrangement is provided for a synchronized interchange of data between different locally dedicated signal sources in a distributed configuration, each signal source being provided with an allocated controller being characterized according to the invention by a single synchronous serial bus with timing information implemented in the bus standard protocol as a link for bi-directional serial multi-channel data interchange between said signal source controllers and/or a data extracting unit.

The invention is based on the idea to implement or integrate into a single internal synchronous serial bus the time sequential control of the signal sources (instruments) and the data flow bi-directionally between the signal sources and with a data extracting unit for example an external computer. This system for the reason of abbreviation is called IBIS (Integrated Bus for Intelligent Sensors) in the following.

This IBIS bus system provides a means allowing bi-directional communication between the processors in the locally dedicated signal sources, for example measuring units like inertial sensors. It uses a simple protocol that is supported by low-cost processors.

Because a serial bus is used, the required interconnections are drastically reduced. Additionally, by making use of the implemented synchronous characteristics of the bus it is possible to integrate the timing information into the serial bus protocol, therefore being able to transfer the required timing information to the signal sources without any additional requirements. These characteristics of the IBIS system make it very convenient for multi-sensor systems. The use of such a bus for instrument communication and synchronization brings considerable advantages to the manufacturing process by simplifying the assembly procedure of a complex multi-sensor system.

The inventive concept is realizable for many fields of applications where local digital processors are used in connection with specific sensors.

The typical IBIS configuration is a synchronous serial communication system that provides interchange of data while keeping very tight timing relationship between its various components. This system is specifically suited to extract data that has to be referred to a particular instant in time with a minimum overhead in the hardware structure. Because it is a serial bus system, the wiring required can be kept at a minimum.

In order to further facilitate an easy implementation in almost any of today's advanced microprocessors and digital signal processor systems it is recommended to follow as much as possible some of standardized protocol recommendations, for example those of the basic standard CCITT 1431. This makes the IBIS bus system simple, low-cost and provides for an effective alternative for accurate communication between distributed signal sources and/or external communication.

The invention will be further explained by way of an example for its configuration and timing and for a preferred mode of operation with reference to the accompanying drawings.
- **Fig. 1**: depicts the frame structure of a first operation mode of the IBIS protocol, i.e. a command mode;
- **Fig. 2**: shows the frame structure of a second operation mode of an example for the IBIS protocol, i.e. an operation mode;
- **Fig. 3**: shows a three-wire bi-directional configuration for a half duplex operation mode as an example for an IBIS bus system according to the invention;
- **Fig. 4**: exemplifies a four-wire full-duplex configuration as an example for an IBIS bus system according to the invention;
- **Fig. 5**: shows basic flow diagrams for an operation mode of an IBIS system according to the invention, i.e. for the master and for an instrument, i.e., a signal source, for example a sensor; and
- **Fig. 6**: gives a flow diagram for an IBIS calibration mode, again for a master and an instrument.

Typically there are two operation modes on the IBIS protocol in accordance with the invention, i.e. a command or calibration mode and an operational mode.

When on command mode there are no restrictions on data transfer between the signal sources, i.e. measuring units on the bus. This mode allows access to all components of the system and is therefore ideal for the process of integration, debugging and calibration. Under command mode each instrument (signal source) on the bus is directly and uniquely identified by its associated IBIS address.

On the other hand the operational mode is a preferably restricted mode that allows only predefined data transfer between the signal sources (instruments, sensors) and the controlling computer. Because of these restriction the communication becomes simple and reliable. A provision may be provided for redundancy and retransmission of data, if required. Under operational mode it is for example possible to build signal sources clusters that respond to a common address. This allows a simple multiple instrument synchronization.

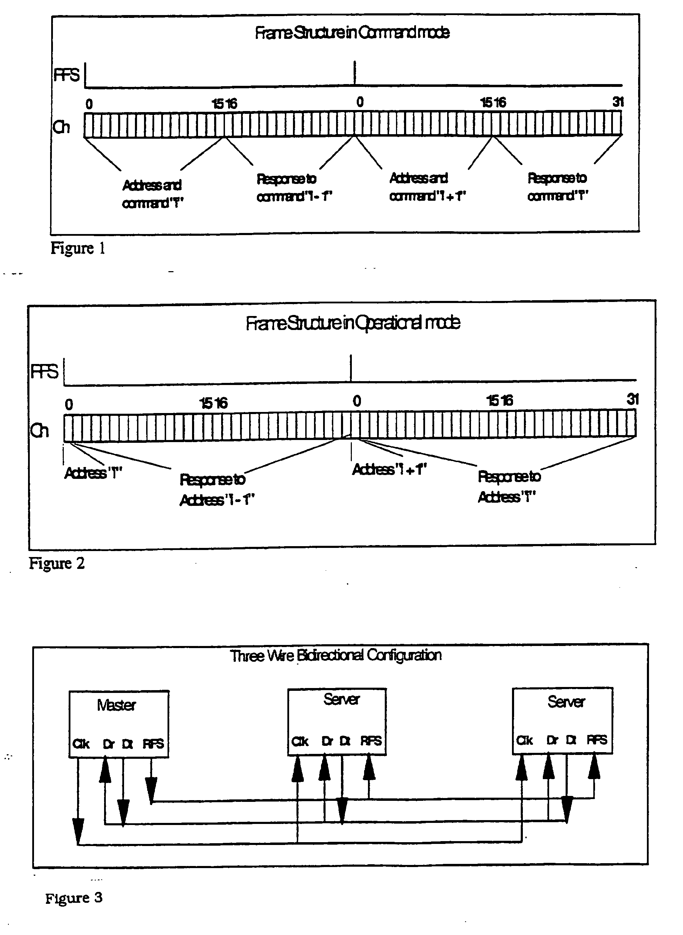

As an example for configuration and timing, reference is now made to Fig. 1 and Fig. 2.

In the specific example, the data transfer is done in packages of 256 bits forming groups of 32 bytes. Each of this byte groups is referred as a frame and is marked by a framing signal.

The data distribution within one frame depends on the operating mode of the interface, i.e. the bus.

In the command mode (Fig. 1) the frame is divided in two sections, one for command transmission, formed by the first 16 bytes of a frame, and one for the response on the second 16 bytes of a frame. The first byte of each frame is always reserved for address.

As specified in Fig. 1, the response to a command is always made on the following frame to the request. This allows for command processing time while still providing full transfer speed.

The command formate during command mode is free of formate, as long as it meets the above-mentioned previous restrictions.

In operation mode the frame is reserved for a signal source response with the exception of the first byte (see Fig. 2). The first byte contains the IBIS address that identifies the signal source (instrument or instrument block) that should deliver its data on the next frame. The data returned by each instrument (signal source) should be that recorded at the instrument at the time of arrival of the framing signal when its address was present on the address byte of the frame.

This requirement guarantees correct data synchronization. For instrument groups, the synchronization is achieved by responding to a subset of the content of the address byte.

The signal source data distribution within the frame can be assigned freely to meet the system requirements, as long as the restriction of keeping the IBIS address on the first byte of the frame is not violated.

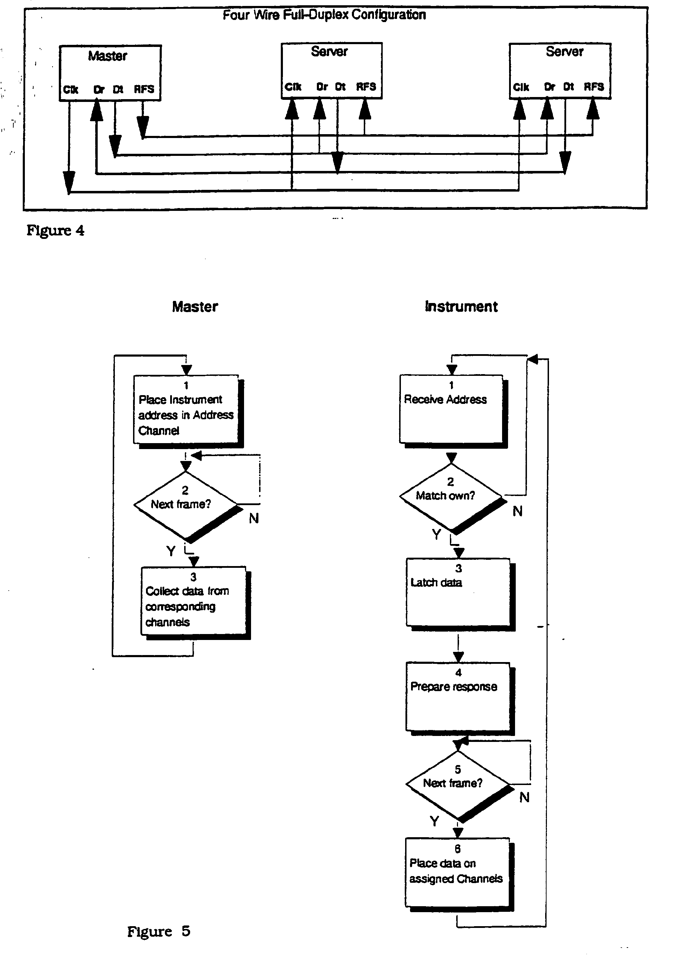

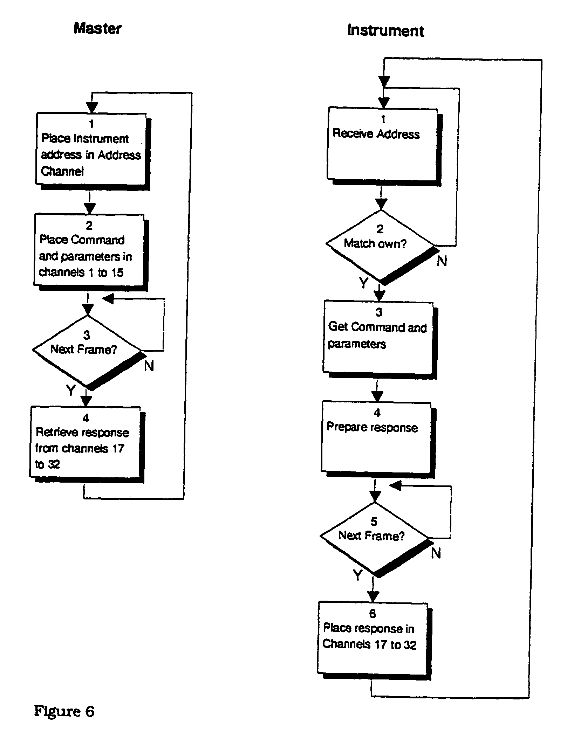

Both modes of operation. i.e. the command mode protocol and the operational mode protocol are explained further by the flow charts of Figs. 5 and 6 in which the individual program steps are marked by respective number sequences and command legends.

Examples of an electrical configuration are given in Fig. 3 and Fig. 4.

For a half-duplex operating mode, a three-wire configuration is sufficient as shown in Fig. 3.

Fig. 4 shows the configuration for a full duplex mode of an IBIS bus according to the invention.

No special definitions are made for the signal levels. It is open to the user to define appropriate drivers to meet the particular system requirements.

A typical configuration is the following:
- Clk:: Serial clock, e.g. 2048 kHz ;
- RFS:: Frame synchronization signal at bit 256 of the frame;
- Dr:: Receive data;
- Dt:: Transmit data.

The signal Dt for this typical configuration must be a tri-state signal. Variations of this configurations are possible and may in some cases be necessary to meet particular system requirements.

Regarding the CCITT-recommendation 1431, the following modifications should be observed when used in connection with the present invention:
- Only the frame concept of the operating frequency is used not the channel assignment and the signalization.
- The operation modes do not have any similarity with said CCITT-recommendation.
- The frame synchronization and the frame structure are defined by an individual specification.
- The frame structure has no similarity with that of the quoted CCITT-recommendation because the protocol is different for an instrument application as in the present invention.
- Different from said CCITT-recommendation, the wiring uses basic signals but avoids to mix such signals, i.e., the signal forming characteristics recommended by said CCITT-standard are not considered by the bus specification according to the invention.

## Claims

1. A circuit arrangement for synchronized interchange of data between different locally dedicated signal sources of a distributed configuration wherein each signal source is provided with an allocated controller, comprising:
- a single synchronous serial bus with timing information implemented in a bus protocol comprising a link for bi-directional serial multi-channel data interchange between said signal source allocated controllers and/or a data extracting unit;
- said single synchronously operated serial bus is operated for synchronized data exchange between said signal source allocated controllers, such as intelligent sensors and said data extracting unit **characterized by** said data extracting unit being master controller, the synchronized data exchange being operated in an operational mode and in a command mode;
- said master controller is controlled in said operational mode so that data exchange between said master controller and at least one of said signal sources allocated controllers is initiated and completed over a sequence of two successive time frames; and
- each of said frames is formed of groups of the same plurality of bytes so that a specific signal source address placed in a specific byte position by said master controller is followed by a defined number of byte positions reserved for sensor response information from the specific signal source addressed during the previous frame.

2. Circuit arrangement according to claim 1,
**characterized in that**
said signal sources are measuring instruments.

3. A system comprising:
- locally dedicated signal sources in a distributed configuration, each provided with an allocated controller.
- a single synchronous serial bus with timing information implemented in a bus protocol comprising a link for bi-directional serial multi-channel data interchange between said signal source allocated controllers and/or a data extracting unit;
- said single synchronously operated serial bus is operated for synchronized data exchange between said signal source allocated controllers, such as intelligent sensors and said data extracting unit **characterized by** said data extracting unit being a master controller, the synchronized data exchange being operated in an operational mode and in a command mode;
- said master controller is controlled in said operational mode so that data exchange between said master controller and at least one of said signal sources allocated controllers is initiated and completed over a sequence of two successive time frames; and
- each of said frames is formed of groups of the same plurality of bytes so that a specific signal source address placed in a specific byte position by said master controller is followed by a defined number of byte positions reserved for sensor response information from the specific signal source addressed during the previous frame.

4. System according to claim 3.
**characterized in that**
said signal sources are measuring instruments.

## Patentansprüche

1. Schaltungsanordnung zum synchronen Austausch von Daten zwischen verschiedenen lokal zugeordneten Signalquellen einer verteilten Konfiguration, wobei jede Signalquelle mit einer zugeordneten Steuerungseinheit versehen ist, mit:
- einem einzelnen synchronen, seriellen Bus mit in einem Busprotokoll implementierter Timinginformation, mit einer Übertragungsstrecke für bidirektionalen, seriellen Datenaustausch über mehrere Kanäle zwischen den Signalquellen zugeordneten Steuerungseinheiten und/oder einer Datenentnahmeeinheit;
- wobei der einzelne synchron betriebene, serielle Bus für einen synchronisierten Datenaustausch zwischen den Signalquellen zugeordneten Steuerungseinheiten, wie intelligenten Sensoren, und der Datenentnahmeeinheit betrieben wird;
**dadurch gekennzeichnet, dass**
- die Datenentnahmeeinheit eine Master-Steuerungseinheit ist und der synchronisierte Datenaustausch in einem Operationsmodus und einem Befehlsmodus betrieben wird;
- die Master-Steuerungseinheit im Operationsmodus so betrieben wird, dass ein Datenaustausch zwischen ihr und mindestens einer der Signalquellen zugeordneten Steuerungseinheiten gestartet und über eine Abfolge zweier aufeinander folgender Zeitrahmen abgeschlossen wird; und
- jeder der Rahmen aus Gruppen derselben Anzahl von Bytes besteht, so dass einer speziellen Signalquellenadresse, die durch die Master-Steuerungseinheit an einer speziellen Byteposition platziert wird, eine definierte Anzahl von Bytepositionen folgt, die für Sensorantwortinformation von der speziellen, während des vorigen Rahmens adressierten Signalquelle reserviert sind.

2. Schaltungsanordnung nach Anspruch 1,
**dadurch gekennzeichnet, dass**
die Signalquellen Messinstrumente sind.

3. System mit:
- lokal zugeordneten Signalquellen in einer verteilten Konfiguration, die jeweils mit einer zugeordneten Steuerungseinheit versehen sind;
- einem einzelnen synchronen, seriellen Bus mit in einem Busprotokoll implementierter Timinginformation, mit einer Übertragungsstrecke für bidirektionalen, seriellen Datenaustausch über mehrere Kanäle zwischen den Signalquellen zugeordneten Steuerungseinheiten und/oder einer Datenentnahmeeinheit;
- wobei der einzelne synchron betriebene, serielle Bus für einen synchronisierten Datenaustausch zwischen den Signalquellen zugeordneten Steuerungseinheiten, wie intelligenten Sensoren, und der Datenentnahmeeinheit betrieben wird;
**dadurch gekennzeichnet, dass**
- die Datenentnahmeeinheit eine Master-Steuerungseinheit ist und der synchronisierte Datenaustausch in einem Operationsmodus und einem Befehlsmodus betrieben wird;
- die Master-Steuerungseinheit im Operationsmodus so betrieben wird, dass ein Datenaustausch zwischen ihr und mindestens einer der Signalquellen zugeordneten Steuerungseinheiten gestartet und über eine Abfolge zweier aufeinander folgender Zeitrahmen abgeschlossen wird; und
- jeder der Rahmen aus Gruppen derselben Anzahl von Bytes besteht, so dass einer speziellen Signalquellenadresse, die durch die Master-Steuerungseinheit an einer speziellen Byteposition platziert wird, eine definierte Anzahl von Bytepositionen folgt, die für Sensorantwortinformation von der speziellen, während des vorigen Rahmens adressierten Signalquelle reserviert sind.

4. System nach Anspruch 3,
**dadurch gekennzeichnet, dass**
die Signalquellen Messinstrumente sind.

## Revendications

1. Agencement de circuits destiné à l'échange synchronisé de données entre différentes sources de signal localement dédiées d'une configuration distribuée dans lequel chaque source de signal est dotée d'un contrôleur alloué, comprenant :
- un bus série synchrone unique avec des informations de synchronisation mis en oeuvre dans un protocole de bus comprenant une liaison pour un échange des données série bi-directionnel multi-canal entre lesdits contrôleurs alloués de source de signal et/ou une unité d'extraction de données :
- ledit bus série unique fonctionnant de manière synchrone fonctionne pour un échange de données synchronisé entre lesdits contrôleurs de source de signal, tels que les capteurs intelligents et ladite unité d'extraction de données, **caractérisés en ce que** ladite unité d'extraction de données est un contrôleur maître, l'échange de données synchronisé fonctionnant en mode opérationnel et en mode commande ;
- ledit contrôleur maître est commandé dans ledit mode opérationnel de sorte que l'échange de données entre ledit contrôleur maître et au moins l'un desdits contrôleurs alloués de sources de signal est mis en oeuvre et fermé pendant une séquence de deux trames de temps successives ; et
- chacune desdites trames est constituée de groupes de la même pluralité d'octets de sorte qu'une adresse de source de signal particulière placée dans une position d'octet spécifique par ledit contrôleur maître soit suivie d'un nombre défini de positions d'octets réservé pour les informations de réponse des capteurs provenant de la source de signal spécifique adressée pendant la trame précédente.

2. Agencement de circuits selon la revendication 1,
**caractérisé en ce que**
lesdites sources de signal sont des instruments de mesure.

3. Système comprenant :
- des sources de signal localement dédiées dans une configuration distribuée, chacune dotée d'un contrôleur alloué.
- un bus série synchrone unique avec des informations de synchronisation mis en oeuvre dans un protocole de bus comprenant une liaison pour un échange des données série bi-directionnel multi-canal entre lesdits contrôleurs alloués de source de signal et/ou une unité d'extraction de données ;
- ledit bus série unique fonctionnant de manière synchrone fonctionne pour un échange de données synchronisé entre lesdits contrôleurs de source de signal, tels que les capteurs intelligents et ladite unité d'extraction de données, **caractérisé en ce que** ladite unité d'extraction est un contrôleur maître, l'échange de données synchronisé fonctionnant en mode opérationnel et en mode commande ;
- ledit contrôleur maître est commandé dans ledit mode opérationnel de sorte que l'échange de données entre ledit contrôleur maître et au moins l'un desdits contrôleurs alloués de sources de signal est mis en oeuvre et fermé pendant une séquence de deux trames de temps successives ; et
- chacune desdites trames est constituée de groupes de la même pluralité d'octets de sorte qu'une adresse de source de signal particulière placée dans une position d'octet spécifique par ledit contrôleur maître soit suivie d'un nombre défini de positions d'octets réservé pour les informations de réponse des capteurs provenant de la source de signal spécifique adressée pendant la trame précédente.

4. Système selon la revendication 3,
**caractérisé en ce que**
lesdites sources de signal sont des instruments de mesure.
